# EUROPEAN PATENT APPLICATION

(11) **EP 4 779 771 A1**
(43) Date of publication of application: **22.07.2026**
(21) Application number: 25864572.0
(22) Date of filing: 01.10.2025
(51) Int. Cl.: H01M 50/204

(54) **BATTERY PACK HAVING GUIDE UNIT FOR PREVENTING DISCONNECTION**

(30) Priority: 05.11.2024 KR 20240155585
(71) Applicant: LG ENERGY SOLUTION, LTD., Seoul 07335 (KR)
(72) Inventor: SON, Hong Se, Daejeon 34122 (KR); MOON, Ki Joo, Daejeon 34122 (KR); KIM, Min Beom, Daejeon 34122 (KR)
(74) Representative: Plasseraud IP
(86) International application number: PCT/KR2025/015613
(87) International publication number: WO 2026/101012

(57) **Abstract**

Disclosed is a battery pack including a plurality of battery modules, a pack housing including an outer frame and a lattice-shaped partition wall provided in the outer frame, the partition wall including a first partition wall and a second partition wall configured to form a plurality of receiving recesses configured to receive the battery modules, a BMS system electrically connected to the plurality of battery modules via a connector, and a guide unit configured to guide the connector so as to be located along an upper side of the first partition wall, wherein the guide unit is inserted into and coupled to a guide recess formed in an upper part of the first partition wall.

## Description

### [Technical Field]

This application claims the benefit of priority to Korean Patent Application No. 10-2024-0155585 filed on November 5, 2024, the disclosure of which is incorporated herein by reference in its entirety.

The present invention relates to a battery pack provided with a guide unit for preventing disconnection, and more particularly to a battery pack provided with a guide unit for preventing disconnection capable of enabling a connector received in the connector to be properly arranged and connected to a battery module, thereby preventing disconnection of the connector.

### [Background Art]

With technological development of mobile devices and an increase in demand therefor, secondary batteries, which are capable of being charged and discharged, have been used as an energy source for various mobile devices. Secondary batteries have also attracted attention as an energy source for electric vehicles and hybrid electric vehicles presented as alternatives to existing gasoline and diesel vehicles, which use fossil fuels.

Depending on the shape of a battery case, secondary batteries are categorized into a cylindrical battery having an electrode assembly mounted in a cylindrical metal can, a prismatic battery having an electrode assembly mounted in a prismatic metal can, and a pouch-shaped battery having an electrode assembly mounted in a pouch-shaped case made of an aluminum laminate sheet.

There are a lithium ion battery, a lithium polymer battery, a nickel cadmium battery, a nickel hydride battery, and a nickel zinc battery as secondary batteries that are widely used at present. The operating voltage of a unit secondary battery cell, i.e. a unit battery cell, is about 2.0 V to 5.0 V. When output voltage higher than the above operating voltage is required, therefore, a plurality of battery cells may be connected to each other in series to constitute a cell module assembly. In addition, cell module assemblies may be connected to each other in series or in parallel to constitute a battery module depending on required output voltage or charge and discharge capacities, and a battery pack is generally manufactured using at least one battery module by adding an additional component.

The battery pack includes at least one battery management system (hereinafter referred to as "BMS") that monitors the state of each battery module included therein and performs a control operation corresponding to the monitored state.

Since each battery module included in the battery pack includes a plurality of battery cells, there are limitations to monitoring the state of all battery cells included in the battery pack using a single BMS. Recently, therefore, a method of mounting one BMS for a predetermined number of battery modules included in a battery pack, setting one of the plurality of BMSs as a master BMS, setting each of the remaining BMSs as a slave BMS, and controlling the overall state of the battery pack has been widely used.

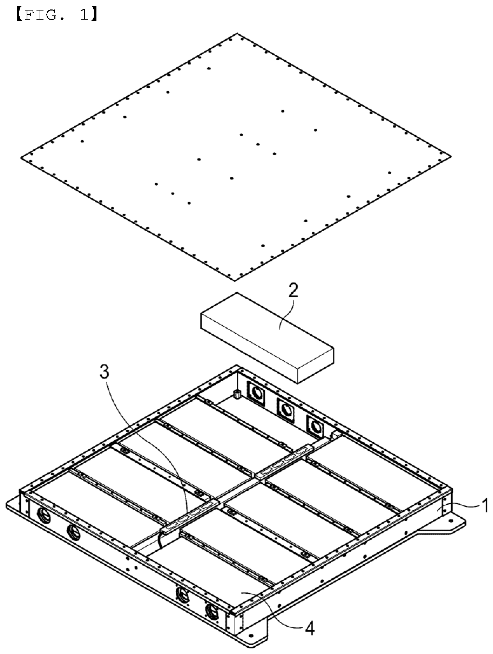

FIG. 1 is a perspective view illustrating a conventional battery pack.

Referring to FIG. 1, the battery pack is configured such that a plurality of battery modules 2 is received in a pack housing 1, each of the battery modules 2 is connected to a slave controller 3, and the plurality of slave controllers 3 is connected to a master controller 4.

In this case, electrical connection between each battery module 2 and the slave controller 3 and between the slave controller 3 and the master controller 4 is achieved via a connector. However, if the connector is received in the pack housing 1 while connecting the above components to each other in the state in which the connector is not properly arranged, the connector may move due to impact inside and outside the battery pack, whereby disconnection of the connector may occur.

### (Prior Art Document)

(Patent Document 1) Korean Patent Application Publication No. 10-2018-0025642

### [Disclosure]

### [Technical Problem]

The present invention has been made in view of the above problems, and it is an object of the present invention to provide a battery pack provided with a guide unit for preventing disconnection capable of enabling a connector to be provided in a pack housing in a properly arranged state, thereby preventing disconnection of the connector.

### [Technical Solution]

As a technical means for achieving the above object, a battery pack according to an embodiment of the present invention includes a plurality of battery modules (100), a pack housing (200) including an outer frame (210) and a lattice-shaped partition wall (220) provided in the outer frame (210), the partition wall including a first partition wall (221) and a second partition wall (222) configured to form a plurality of receiving recesses (230) configured to receive the battery modules (100), a BMS system (300) electrically connected to the plurality of battery modules (100) via a connector (330), and a guide unit (400) configured to guide the connector (330) so as to be located along an upper side of the first partition wall (221), wherein the guide unit (400) is inserted into and coupled to a guide recess (221a) formed in an upper part of the first partition wall (221).

Also, in the battery pack according to the embodiment of the present invention, the guide recess (221a) may be formed so as to be partially depressed downward from an upper surface of the first partition wall (221) and may be provided in plural.

Also, in the battery pack according to the embodiment of the present invention, the guide unit (400) may include a body portion (410) configured to be inserted into the guide recess (221a) and a head portion (420) formed on the body portion (410), the head portion extending farther outward than the circumference of the guide recess (221a).

Also, in the battery pack according to the embodiment of the present invention, the connector (330) may include a terminal portion (331) electrically connected to the BMS system (300) and a wire (332) configured to transport power or current.

Also, in the battery pack according to the embodiment of the present invention, the guide unit (400) may be disposed such that a part of the body portion (410) and the head portion (420) are exposed from the guide recess (221a), and the wire (332) may be wound around an outer surface of the exposed part of the body portion (410).

Also, in the battery pack according to the embodiment of the present invention, the guide unit (400) may press and fix a part of the wire (332) through the upper surface of the first partition wall (221) and the head portion (420).

Also, in the battery pack according to the embodiment of the present invention, the guide recess (221a) may be provided in an inner surface thereof with a female thread, and the body portion (410) may be provided on an outer surface thereof with a male thread, whereby the body portion may be threadedly coupled to the guide recess (221a).

Also, in the battery pack according to the embodiment of the present invention, the head portion (420) may include an extension portion (421) extending farther outward than the circumference of the guide recess (221a), the extension portion being seated on the upper surface of the first partition wall (221), and a guide hole (422) formed in an upper side of the extension portion (421), the guide hole being configured to allow the wire (332) to pass therethrough.

Also, in the battery pack according to the embodiment of the present invention, the first partition wall (221) may be disposed in a first direction corresponding to an overall width direction of each of the plurality of battery modules (100) received in the receiving recesses (230), and the second partition wall (222) may be disposed in a second direction perpendicular to the first direction.

Also, in the battery pack according to the embodiment of the present invention, the BMS system (300) may include a plurality of slave controllers (310) provided so as to be connected to the plurality of battery modules (100), respectively, and a master controller (320) connected to the plurality of slave controllers (310), the master controller being received in any one of the plurality of receiving recesses (230).

Also, in the battery pack according to the embodiment of the present invention, the connector (330) may connect the battery module (100) and the slave controller (310) to each other and/or the slave controller (310) and the master controller (320) to each other.

Also, in the battery pack according to the embodiment of the present invention, the slave controller (310) may be seated on the first partition wall (221).

### [Advantageous Effects]

As is apparent from the above description, in a battery pack provided with a guide unit for preventing disconnection according to the present invention, a plurality of guide units provided along a partition wall of a pack housing guides a connector so as to be located along the partition wall such that the connector is received in the pack housing while being properly arranged along the partition wall, thereby preventing disconnection of the connector.

### [Description of Drawings]

FIG. 1 is a perspective view illustrating a conventional battery pack.
FIG. 2 is a perspective view of a battery pack according to the present invention.
FIG. 3 is a top view of the battery pack according to the present invention.
FIG. 4 is a side perspective view of the battery pack according to the present invention.
FIG. 5 is a view illustrating a first embodiment of a guide unit constituting the battery pack according to the present invention.
FIG. 6 is a view illustrating a second embodiment of the guide unit constituting the battery pack according to the present invention.

### [Best Model

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a predetermined element is included does not mean that other elements are excluded, but means that such elements may be further included unless mentioned otherwise.

Hereinafter, a battery pack provided with a guide unit for preventing disconnection according to the present invention will be described.

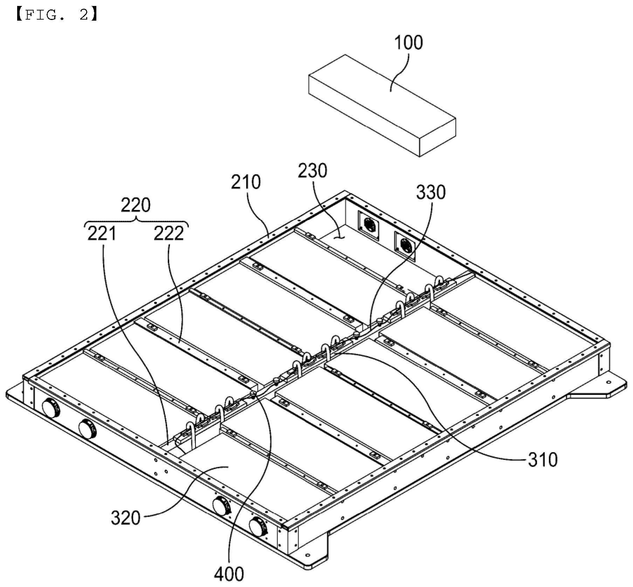

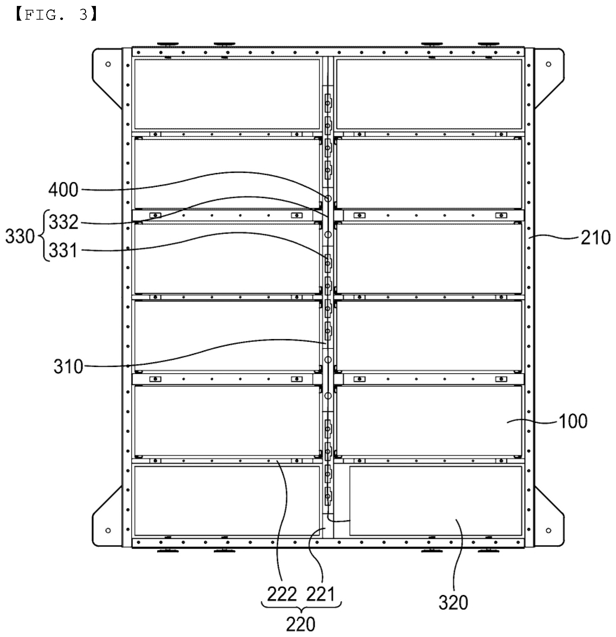

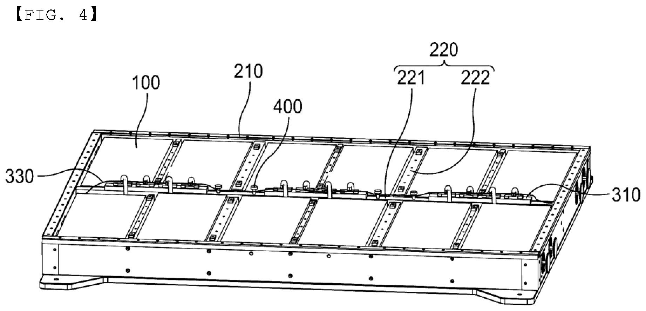

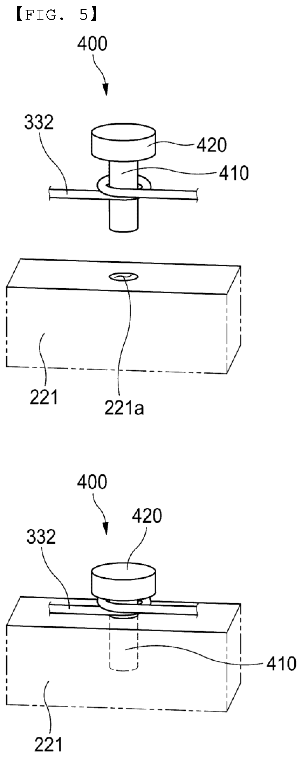

FIG. 2 is a perspective view of a battery pack according to the present invention, and FIG. 3 is a top view of the battery pack according to the present invention. In addition, FIG. 4 is a side perspective view of the battery pack according to the present invention, and FIG. 5 is a view illustrating a first embodiment of a guide unit constituting the battery pack according to the present invention.

Referring to FIGs. 2 to 5, the battery pack according to the present invention includes a battery module 100, a pack housing 200, a BMS system 300, and a guide unit 400.

First, the battery module 100 includes a plurality of battery cells, wherein each of the battery cells may be a pouch-shaped secondary battery including an electrode assembly, an electrode lead, and a battery case.

The electrode assembly may be a jelly-roll type electrode assembly, which is configured to have a structure in which a long sheet type negative electrode and a long sheet type positive electrode are wound in the state in which a separator is interposed therebetween, a stacked type electrode assembly including unit cells, each of which is configured to have a structure in which a rectangular positive electrode and a rectangular negative electrode are stacked in the state in which a separator is interposed therebetween, a stacked and folded type electrode assembly, which is configured to have a structure in which unit cells are wound using a long separation film, or a laminated and stacked type electrode assembly, which is configured to have a structure in which unit cells are stacked in the state in which a separator is interposed therebetween and are then attached to each other; however, the present invention is not limited thereto.

The positive electrode includes a positive electrode current collector and a positive electrode active material applied to each of an upper surface and a lower surface of the positive electrode current collector. The positive electrode active material may be mixed with a conductive agent and a binder, and a filler may be further added if necessary.

The negative electrode includes a negative electrode current collector and a negative electrode active material applied to each of an upper surface and a lower surface of the negative electrode current collector. The negative electrode active material may be further mixed with a conductive agent and a binder, and the negative electrode current collector may be coated with the mixture.

The separator prevents short circuit between the negative electrode and the positive electrode and allows only migration of lithium ions. It is preferable for the separator to be made of any one selected from among polyethylene, polypropylene, a dual layer of polyethylene/polypropylene, a triple layer of polyethylene/polypropylene/polyethylene, a triple layer of polypropylene/polyethylene/polypropylene, and organic fiber filter paper; however, the present invention is not limited thereto.

The battery case, which is configured to receive the electrode assembly, is provided with a receiving portion formed using a laminate sheet including an outer covering layer, a metal layer, and an inner covering layer.

The inner covering layer is disposed in direct contact with the electrode assembly, and therefore the inner covering layer must exhibit high insulation properties and high resistance to an electrolytic solution. In addition, the inner covering layer must exhibit high sealability in order to hermetically seal the case from the outside, i.e. a thermally-bonded sealed portion between inner layers must exhibit excellent thermal bonding strength.

The inner covering layer may be made of a material selected from among a polyolefin-based resin, such as polypropylene, polyethylene, polyethylene acrylate, or polybutylene, a polyurethane resin, and a polyimide resin, which exhibit excellent chemical resistance and high sealability; however, the present invention is not limited thereto, and polypropylene, which exhibits excellent mechanical properties, such as tensile strength, rigidity, surface hardness, and impact resistance, and excellent chemical resistance, is the most preferably used.

The metal layer, which is disposed so as to abut the inner covering layer, corresponds to a barrier layer configured to prevent moisture or various kinds of gas from permeating into the battery from the outside. An aluminum thin film, which is lightweight and easily shapeable, may be used as a preferred material for the metal layer.

The outer covering layer is provided on the other surface of the metal layer. The outer covering layer may be made of a heat-resistant polymer that exhibits excellent tensile strength, resistance to moisture permeation, and resistance to air transmission such that the outer covering layer exhibits high heat resistance and chemical resistance while protecting the electrode assembly. As an example, the outer covering layer may be made of nylon or polyethylene terephthalate; however, the present invention is not limited thereto. The battery module 100 may be provided in plural, and the pack housing 200 may be provided with a plurality of receiving recesses 230 configured to receive the plurality of battery modules 100, respectively.

The pack housing 200 may be made of a lightweight plastic material having sufficient rigidity to protect components received therein from external impact and foreign matter.

The pack housing 200 includes an outer frame 210 and a partition wall 220, by which the plurality of receiving recesses 230 may be formed. The outer frame 210 has an empty space formed therein, and the plurality of battery modules 100 and the partition wall 220 may be received in the empty space. For example, the outer frame 210 may include an upper case and a lower case, wherein the upper case and lower case may be coupled to each other in the form of a box.

The partition wall 220 includes a first partition wall 221 and a second partition wall 222 provided in the outer frame 210 to form the plurality of receiving recesses 230 configured to receive the battery modules 100, wherein the first partition wall 221 and the second partition wall 222 may be disposed in a grid pattern.

The first partition wall 221 may be disposed in a first direction (12 o'clock to 6 o'clock direction in FIG. 3) corresponding to an overall width direction of each of the plurality of battery modules 100 received in the receiving recesses 230, and the second partition wall 222 may be disposed in a second direction (3 o'clock to 9 o'clock direction in FIG. 3) perpendicular to the first direction, i.e., a direction corresponding to the overall length direction of each of the battery modules 100.

For example, the first partition wall 221 may be disposed at the center of the outer frame 210 in the second direction, and the second partition walls 222 may be disposed spaced apart from each other by a distance corresponding to the overall width of each of the battery modules 100.

The distance between a frame disposed in the first direction so as to constitute the outer frame 210 and the first partition wall 221 corresponds to the overall length of each of the battery modules 100, and the distance between a frame disposed in the second direction so as to constitute the outer frame 210 and the second partition wall 222 may correspond to the overall width of each of the battery modules 100.

Through the layout of the first partition wall 221 and the second partition wall 222, the outer frame 210 and the partition wall 220 may form the plurality of receiving recesses 230 configured to receive the battery modules 100. In this case, the size of the receiving recess 230 may correspond to the size of the battery module 100.

The first partition wall 221 may be provided in an upper part thereof with a plurality of guide recesses 221a formed so as to be partially depressed downward (6 o'clock position in FIG. 4) from an upper surface (12 o'clock position in FIG. 4). The plurality of guide recesses 221a may be formed in upper part of the first partition wall 221 so as to be spaced apart from each other by a predetermined distance in the first direction.

The guide unit 400 may be inserted into and coupled to each of the guide recesses 221a. For example, the guide recess 221a may be provided in an inner surface thereof with a female thread formed so as to be threadedly coupled to the guide unit 400. In this case, a male thread may be formed on an outer surface of a part of the guide unit 400.

The BMS system 300 may include a slave controller 310 and a master controller 320 configured to be electrically connected to the plurality of battery modules 100 and a connector 330 configured to electrically connect the plurality of battery modules 100 and the slave controller 310 to each other or the slave controller 310 and the master controller 320 to each other.

The slave controller 310 is electrically connected to the battery module 100, and may be provided in plural so as to be connected to the plurality of battery modules 100, respectively. The slave controller 310 may be configured to sense the voltage, the temperature, etc. of the battery module 100 and to provide data.

The slave controller 310 may be disposed at the first partition wall 221. More specifically, the first partition wall 221 may be provided with a recess (not shown) or a hole (not shown) depressed downward from the upper surface thereof to allow the slave controller 310 to be seated therein, and the slave controller 310 may be seated and disposed in the recess or the hole formed in the first partition wall 221.

In addition, the master controller 320 is connected to the plurality of slave controllers 310, and may be received in any one of the plurality of receiving recesses 230 formed in the pack housing 200. The master controller 320 may be configured to receive data information of the battery module 100 through the plurality of slave controllers 310 and to comprehensively manage the functions of the battery pack.

The connector 330 includes a terminal portion 331 electrically connected to the slave controller 310, the master controller 320, or the battery module 100, and a wire 332 configured to transport power or current. The connector 330 is a wired connection structure that electrically connects the slave controller 310, the master controller 320, or the battery module 100.

The terminal portion 331 is inserted into and electrically connected to a part of any one of the battery module 100, the slave controller 310, and the master controller 320, and the terminal portion 331 may be provided in a pair. The wire 332 may electrically connect the pair of terminal portions 331 to each other.

For example, the connector 330 may connect one of the pair of terminal portions 331 to the battery module 100 and the other terminal portion 331 to the slave controller 310, thereby electrically connecting the battery module 100 and the slave controller 310 to each other. Furthermore, in another example, the connector 330 may connect one of the pair of terminal portions 331 to the slave controller 310 and the other terminal portion 331 to the master controller 320, thereby connecting the slave controller 310 and the master controller 320 to each other.

The BMS system 300 is well known to those skilled in the art, and therefore a more detailed description thereof will be omitted.

Meanwhile, the guide unit 400 may guide the wire 332 of the connector 330 so as to be located along an upper side of the first partition wall 221. The guide unit 400 includes a body portion 410 and a head portion 420, wherein the body portion 410 may be inserted into the guide recess 221a of the first partition wall 221, and the head portion 420 may be seated on the first partition wall 221.

The body portion 410 may be provided on an outer surface thereof with a male thread so as to be inserted into and connected to the guide recess 221a, and may be threadedly coupled to the guide recess 221a having the female thread formed therein. The body portion 410 may be disposed such that a part thereof is inserted into the guide recess 221a and the remaining part thereof is not inserted into but is exposed from the guide recess 221a. In this case, the wire 332 may be wound along the outer surface of the body portion 410 on the remaining part of the body portion 410 (the part exposed from the guide recess 221a).

The guide unit 400 including the body portion 410 is provided in plural so as to correspond respectively to the plurality of guide recesses 221a formed in the first partition wall 221 in the first direction, and the wire 332 may be guided along the upper side of the first partition wall 221 while being wound around the body portion 410 of the guide unit 400.

In addition, the head portion 420 is formed on the body portion 410, and the head portion 420 may extend farther outward than the body portion 410. In other words, the head portion 420 is formed so as to extend farther outward than the circumference of the guide recess 221a such that, when the body portion 410 is inserted into the guide recess 221a, the head portion 420 can be seated on the upper surface of the first partition wall 221. The head portion 420 may be disposed so as not to be inserted into the guide recess 221a but to be exposed from the guide recess 221a.

As a part of the body portion 410 is inserted into the guide recess 221a, the head portion 420 may press and fix a part of the wire 332 wound around the outer surface of the body portion 410 together with the upper surface of the first partition wall 221. Accordingly, the wire 332 may be pressed and fixed by the guide unit 400, whereby it is possible to prevent the wire from being separated or detached from the first partition wall 221.

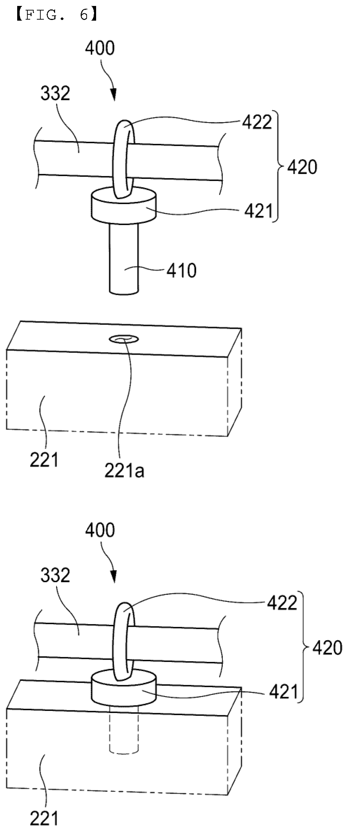

FIG. 6 is a view illustrating a second embodiment of the guide unit constituting the battery pack according to the present invention.

The battery pack according to the second embodiment is identical in construction to the battery pack according to the first embodiment except for the guide unit 400 according to the first embodiment. The guide unit 400 according to the second embodiment includes a body portion 410 and a head portion 420, in the same manner as the guide unit of the first embodiment, wherein the head portion 420 may include an extension portion 421 and a guide hole 422.

The extension portion 421 may extend farther outward than the circumference of the guide recess 221a and may be seated on the upper surface of the first partition wall 221, and the guide hole 422 may be formed at an upper side (12 o'clock position in FIG. 6) of the extension portion 421 so as to allow the wire 332 to pass therethrough.

Accordingly, the wire 332 may be guided along the upper side of the first partition wall 221 by passing through the guide hole 422 of the guide unit 400 inserted into each of the plurality of guide recesses 221a formed along the first partition wall 221.

At this time, the wire 332 may pass through the guide hole 422 of the guide unit 400 inserted into the guide recess 221a, whereby the wire may be located along the upper side of the first partition wall 221. In another example, the guide unit 400 may be inserted into the guide recess 221a after the wire passes through the guide hole 422 of the guide unit 400, whereby the wire 332 may be located along the upper side of the first partition wall 221.

However, when the wire 332 is provided in a state of passing through the guide hole 422 of the guide unit 400, the body portion 410 may be formed so as to have a polygonal sectional shape in order to prevent twisting of the wire 332, and the guide recess 221a may be formed in a shape corresponding thereto, whereby the body portion 410 may be inserted into the guide recess 221a. In this case, it is preferable for the body portion 410 have a size that allows the body portion to be press-fit into the guide recess 221a.

Although the specific details of the present invention have been described in detail, those skilled in the art will appreciate that the detailed description thereof discloses only preferred embodiments of the present invention and thus does not limit the scope of the present invention. Accordingly, those skilled in the art will appreciate that various changes and modifications are possible, without departing from the category and the technical idea of the present invention, and it will be obvious that such changes and modifications fall within the scope of the appended claims.

### (Description of Reference Symbols)

- 100:: Battery module
- 200:: Pack housing
- 210:: Outer frame
- 220:: Partition wall
- 221:: First partition wall 221a: Guide recess
- 222:: Second partition wall
- 230:: Receiving recess
- 300:: BMS system
- 310:: Slave controller
- 320:: Master controller
- 330:: Connector
- 331:: Terminal portion 332: Wire
- 400:: Guide unit
- 410:: Body portion
- 420:: Head portion
- 421:: Extension portion 422: Guide hole

## Claims

1. A battery pack comprising:
a plurality of battery modules;
a pack housing comprising an outer frame and a lattice-shaped partition wall provided in the outer frame, the partition wall comprising a first partition wall and a second partition wall configured to form a plurality of receiving recesses configured to receive the battery modules;
a BMS system electrically connected to the plurality of battery modules via a connector; and
a guide unit configured to guide the connector so as to be located along an upper side of the first partition wall, wherein
the guide unit is inserted into and coupled to a guide recess formed in an upper part of the first partition wall.

2. The battery pack according to claim 1, wherein the guide recess is formed so as to be partially depressed downward from an upper surface of the first partition wall and is provided in plural.

3. The battery pack according to claim 2, wherein the guide unit comprises:
a body portion configured to be inserted into the guide recess; and
a head portion formed on the body portion, the head portion extending farther outward than a circumference of the guide recess.

4. The battery pack according to claim 3, wherein the connector comprises:
a terminal portion electrically connected to the BMS system; and
a wire configured to transport power or current.

5. The battery pack according to claim 4, wherein
the guide unit is disposed such that a part of the body portion and the head portion are exposed from the guide recess, and
the wire is wound around an outer surface of the exposed part of the body portion.

6. The battery pack according to claim 5, wherein the guide unit presses and fixes a part of the wire through the upper surface of the first partition wall and the head portion.

7. The battery pack according to claim 4, wherein
the guide recess is provided in an inner surface thereof with a female thread, and
the body portion is provided on an outer surface thereof with a male thread, whereby the body portion is threadedly coupled to the guide recess.

8. The battery pack according to claim 4, wherein the head portion comprises:
an extension portion extending farther outward than the circumference of the guide recess, the extension portion being seated on the upper surface of the first partition wall; and
a guide hole formed in an upper side of the extension portion, the guide hole being configured to allow the wire to pass therethrough.

9. The battery pack according to claim 2, wherein
the first partition wall is disposed in a first direction corresponding to an overall width direction of each of the plurality of battery modules received in the receiving recesses, and
the second partition wall is disposed in a second direction perpendicular to the first direction.

10. The battery pack according to claim 9, wherein the BMS system comprises:
a plurality of slave controllers provided so as to be connected to the plurality of battery modules, respectively; and
a master controller connected to the plurality of slave controllers, the master controller being received in any one of the plurality of receiving recesses.

11. The battery pack according to claim 10, wherein the connector connects the battery module and the slave controller to each other and/or the slave controller and the master controller to each other.

12. The battery pack according to claim 10, wherein the slave controller is disposed at the first partition wall.
